(19) Europäisches Patentamt
European Patent Office
Office européen des brevets

(11) EP 4 763 911 A1

(12) EUROPEAN PATENT APPLICATION

(43) Date of publication:
**24.06.2026 Bulletin 2026/26**

(21) Application number: **24222504.3**

(22) Date of filing: **20.12.2024**

(51) International Patent Classification (IPC):
***C08L 23/0807*** *(2025.01)*

(52) Cooperative Patent Classification (CPC):
(C-Sets available)
**C08L 23/0815;** C08L 2205/025; C08L 2207/20
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **LIU, Yi**
  **4021 Linz (AT)**
- **ANKER, Martin**
  **44486 Stenungsund (SE)**
- **KELLER, Paul**
  **06850 Kulloo (FI)**

(74) Representative: **Kador & Partner Part mbB**
**Corneliusstraße 15**
**80469 München (DE)**

(54) **MIXED VIRGIN POLYETHYLENE / RECYCLED POLYETHYLENE COMPOSITION WITH HIGH TEAR STRENGTH AND GOOD FLEXIBILITY**

(57) The present invention relates to a mixed virgin polyethylene / recycled polyethylene composition having a melt flow rate $MFR_2$ (ISO 1133:2022, 2.16 kg, 190 °C) in the range of from 0.10 to less than 1.00 g/10 min; and a density (ISO 1183-1:2019) in the range of from 940 to 980 $kg/m^3$, the composition comprising A) a recycled polyethylene fraction comprising at least a first recycled polyethylene component (rPE1), wherein the recycled polyethylene fraction is present in an amount of 40 wt.-% or more, based on the total weight of the mixed virgin polyethylene / recycled polyethylene composition, and B) a virgin polyethylene fraction comprising at least a first virgin polyethylene component (vPE1), wherein the first virgin polyethylene component (vPE1) has a melt flow rate MFRs (ISO 1133:2022, 5 kg, 190 °C) of up to 0.50 g/10 min, a density (ISO 1183-1:2019) in the range of from 942 to 975 $kg/m^3$, and is present in an amount of 15 wt.-% or more, based on the total weight of the mixed virgin polyethylene / recycled polyethylene composition, wherein the mixed virgin polyethylene / recycled polyethylene composition has, as determined by quantitative $^{13}C\{^1H\}$ NMR spectroscopy as described herein: (a) a total amount of ethylene units (C2 units) of at least 90 wt.-%, and (b) a total amount of continuous propylene units (C3 units) in the range of from 0.1 to 5.0 wt.-%.

The present invention further relates to a method of preparing the mixed virgin polyethylene / recycled polyethylene composition, an article comprising the same and the use of the mixed virgin polyethylene / recycled polyethylene composition for wire and cable jacketing applications.

EP 4 763 911 A1

(52) Cooperative Patent Classification (CPC): (Cont.)

C-Sets
**C08L 23/0815, C08L 23/0815**

## Description

### Field of the invention

The present invention relates to mixed virgin polyethylene / recycled polyethylene compositions having excellent tear strength and good flexibility, to a method of preparing the same, to articles comprising the same and to the use of these compositions for wire and/or cable applications.

### Background of the invention

Polyolefins, in particular polyethylene and polypropylene, are increasingly consumed in large amounts in a wide range of applications, including packaging for food and other goods, fibers, automotive components, wires and cables, and a great variety of manufactured articles.

Although recycling of plastic material has already begun in the mid-90s by implementing collection systems, which allow more target-oriented collection and separation of plastic materials from other household waste materials, the reuse of plastic material originating from plastic waste is still limited. The so-called post-consumer recyclates (PCR) generally contain mixtures of different plastics and several contaminant materials. Methods have been developed to further purify the post-consumer recyclates (PCR). For example, WO 2018/046578 A1 discloses a process for the preparation of polyolefin recyclates from mixed colour polyolefin waste including packaging waste.

However, recycled polyolefins are generally contaminated by both organic and inorganic substances. The effectiveness of additivation for recyclate-containing composition can be reduced due to the presence of contamination in the recyclate, for polyethylene being e.g., PP, other foreign polymers including PET, PA, PS, etc., unwanted metals, and functional groups introduced in the course of recycling.

This contamination not only reduces the stability of the recycled polymer but also may negatively influence mechanical properties thereof. However, good mechanical properties are important for the reuse of recycled polymers. For example, for the use of recycled polyolefins as jacketing materials in cables, properties such as acceptable ESCR performance (Environmental Stress Crack Resistance, with a bell test failure time >1,000 hours), good tensile properties, and good tear resistance are important. Further, good flexibility of the material is desirable.

In order to provide recycled polymers with good mechanical properties, such polymers are blended with virgin, i.e., freshly produced and not yet used, polymers. For example, WO 2021/233818 A1 discloses polyethylene recyclate compositions comprising virgin high density polyethylenes (HDPE) suitable as jacketing materials that have acceptable ESCR performance. This disclosure uses for inventive examples a blend of 75 wt.-% of a virgin HDPE component and a commercial source of a PCR polyethylene, which has an amount of continuous C3 units (PP) of more than 10 wt.-%. Such a recycled polyethylene suffers from high amounts of contamination, as to why relatively small amounts of the recycled polymer are used for adequate ESCR performance. However, it is generally desirable to enhance the amount of a recycled polymer in a product.

Good ESCR performance is addressed in WO 2024/153753 A1, which also uses a blend of recycled and virgin polyethylenes. However, the recycled polyethylenes used in the inventive examples of this document were produced in a special recycling process that comprises hot washing and detailed sorting to minimise contaminations, besides, the flexibility of the materials may still be improved.

Thus, there is still a need for recycled materials with good mechanical properties as described above. These products should contain high amounts of recycled polyethylenes. Further, recycled polyethylene from a simple recycling process should be used in such products to limit costs and be commercially interesting. Hence, these products and their mechanical properties should be less sensitive to the contamination degree of the recycled polyethylenes.

### Summary of the invention

The objects underlying the present invention are to provide a mixed virgin polyethylene / recycled polyethylene composition that addresses the above-described needs.

Accordingly, the present invention provides a mixed virgin polyethylene / recycled polyethylene composition having a melt flow rate $MFR_2$ (ISO 1133:2022, 2.16 kg, 190 °C) in the range of from 0.10 to less than 1.00 g/10 min; and a density (ISO 1183-1:2019) in the range of from 940 to 980 kg/$m^3$, the composition comprising

A) a recycled polyethylene fraction comprising at least a first recycled polyethylene component (rPE1), wherein the recycled polyethylene fraction is present in an amount of 40 wt.-% or more, based on the total weight of the mixed virgin polyethylene / recycled polyethylene composition, and

B) a virgin polyethylene fraction comprising at least a first virgin polyethylene component (vPE1), wherein the first

virgin polyethylene component (vPE1) has a melt flow rate MFRs (ISO 1133:2022, 5 kg, 190 °C) of up to 0.50 g/10 min, a density (ISO 1183-1:2019) in the range of from 942 to 975 kg/$m^3$, and is present in an amount of 15 wt.-% or more, based on the total weight of the mixed virgin polyethylene / recycled polyethylene composition,

wherein the mixed virgin polyethylene / recycled polyethylene composition has, as determined by quantitative $^{13}C\{^1H\}$ NMR spectroscopy as described herein:

(a) a total amount of ethylene units (C2 units) of at least 90 wt.-%, and

(b) a total amount of continuous propylene units (C3 units) in the range of from 0.1 to 5.0 wt.-%.

The mixed virgin polyethylene / recycled polyethylene composition is a composition of recycled polyethylene with a particularly selected virgin polyethylene that improves the properties of the recycled polyethylene. It has been unexpectedly found that the addition of at least 15 wt.-% of a virgin polyethylene with the recited melt flow rate and density and the control of these parameters in the composition could provide compositions with the desired mechanical properties, wherein tear resistance and flexibility were even improved compared to several prior art materials.

High amounts of recycled polyethylenes (such as 50 wt.-%) could be used in the compositions.

Moreover, different recycled polyethylenes with different degrees of contamination could be used in the compositions. Even compositions with recycled polyethylenes having a very high content of contaminants still show excellent mechanical properties.

The present invention further provides a method of preparing the mixed virgin polyethylene / recycled polyethylene composition, comprising the steps of melting, blending and extruding the recycled polyethylene fraction, and the virgin polyethylene fraction in an extruder in the optional presence of additives.

Moreover, the present invention relates to an article comprising the mixed virgin polyethylene / recycled polyethylene composition, as well as to the use of the mixed virgin polyethylene / recycled polyethylene composition for wire and/or cable jacketing applications.

**Detailed description of the invention**

The present invention relates to a mixed virgin polyethylene / recycled polyethylene composition comprising a recycled polyethylene fraction and a virgin polyethylene fraction, as defined above.

***Mixed virgin polyethylene / recycled polyethylene composition***

In the context of the present invention, the expression *"mixed virgin polyethylene / recycled polyethylene composition"* refers to a mixture comprising a recycled polyethylene fraction and a virgin polyethylene fraction, with at least one component in each fraction, i.e., a mixture comprising at least one virgin polyethylene component and at least one recycled polyethylene component.

Generally, *"polyethylene"* refers to a homopolymer of ethylene and a copolymer of ethylene and other comonomer units such as alpha-olefins, preferably propylene, 1-butene, 1-hexene and 1-octene and a mixture thereof. A homopolymer of ethylene usually has 99 wt.-% and more of ethylene units, while a copolymer of ethylene has more than 50 wt.-% of ethylene units, based on the total weight of the respective polymer. The content of comonomers can generally be determined by quantitative $^{13}C\{^1H\}$ NMR spectroscopy as described herein. In the context of the present invention, the expression *"polyethylene"* also encompasses two or more polyethylenes as well as polyethylenes comprising some contents of other polymers (in particular for the recycled polymers).

In the context of the present invention, the expression *"virgin polyethylene"* refers to newly produced polyethylene materials prior to their first use, which have not yet been recycled.

In the context of the present invention, the expression *"recycled polyethylene"* refers to a polyethylene material produced predominantly (i.e., 75 wt.-% to 100 wt.-%, or even 95 wt.-% to 100 wt.-%, for example 99 wt.-%) from raw materials obtained from recovered sources, such as products obtained from mechanical or chemical recycling processes, particularly from mechanical recycling of (mixed) plastic waste.

Recycled polyethylene materials are considered to be structurally different from virgin polyethylene materials in that the overall variance of the composition is broader than in the case of virgin materials. For example, the molecular weight distribution of recycled polyethylene materials may be broader than that of virgin polyethylene materials. Alternatively or in addition, recycled polyethylene materials may be characterized in that they comprise higher amounts of contamination, such as organic contamination (e.g., organic additives, residual amounts of polymeric materials of different polymer classes) and/or inorganic contamination (e.g., metal contaminants, residual fillers or pigments, halogens, sulfur). Often the presence of limonene even in a small amount (few ppm, such as 1 ppm or more) is indicative of a

recycled polymer (e.g., recycled polyolefin).

According to the present invention, the mixed virgin polyethylene / recycled polyethylene composition has a melt flow rate $MFR_2$ (ISO 1133:2022, 2.16 kg, 190 °C) in the range of from 0.10 to less than 1.00 g/10 min, such as from 0.10 to 0.95 g/10 min, preferably from 0.15 to 0.80 g/10 min and more preferably from 0.20 to 0.70 g/10 min; and a density (ISO 1183-1:2019) in the range of from 940 to 980 kg/$m^3$, preferably from 946 to 980 kg/$m^3$, more preferably from 947 to 975 kg/$m^3$ and still more preferably from 948 to 970 kg/$m^3$.

According to the present invention, the mixed virgin polyethylene / recycled polyethylene composition has, as determined by quantitative $^{13}C\{^1H\}$ NMR spectroscopy as described herein, a total amount of ethylene units (C2 units) of at least 90 wt.-%, such as in the range of from 90 to 99 wt.-%, preferably from 91 to 98 wt.-% and more preferably from 92 to 97 wt.-%; and a total amount of continuous propylene units (C3 units) in the range of from 0.1 to 5.0 wt.-%, preferably from 0.2 to 4.0 wt.-%, and more preferably from 0.3 to 3.0 wt.-%.

In some embodiments, the mixed virgin polyethylene / recycled polyethylene composition has a melt flow rate $MFR_2$ (ISO 1133:2022, 2.16 kg, 190 °C) in the range of from 0.20 to 0.70 g/10 min; a density (ISO 1183-1:2019) in the range of from 948 to 970 kg/$m^3$; a total amount of ethylene units (C2 units) in the range of from 92 to 97 wt.-%; and a total amount of continuous propylene units (C3 units) in the range of from 0.3 to 3.0 wt.-%.

In addition, the mixed virgin polyethylene / recycled polyethylene composition according to the present invention may have a total amount of C4 units in the range of from 0.1 to 5.0 wt.-%, preferably from 0.4 to 4.0 wt.-% and more preferably from 0.8 to 3.0 wt.-%, as determined by quantitative $^{13}C\{^1H\}$ NMR spectroscopy as described herein.

The mixed virgin polyethylene / recycled polyethylene composition according to the present invention may also have a total amount of C6 units in the range of from 0.1 to 5.0 wt.-%, preferably from 0.5 to 4.0 wt.-% and more preferably from 1.0 to 3.0 wt.-%, as determined by quantitative $^{13}C\{^1H\}$ NMR spectroscopy as described herein.

Unless otherwise indicated, any amounts comprised in the mixed virgin polyethylene / recycled polyethylene composition according to the present invention and/or in the recycled polyethylene fraction and its components relating to the content of particular repeating units, for example C2 (ethylene), continuous C3 (polypropylene) units, C4 and C6 units, as determined by quantitative $^{13}C\{^1H\}$ NMR spectroscopy and described herein below are to be understood as wt.-% based on the total amount of a fraction of the composition or recycled polyethylene fraction, respectively, which is soluble in 1,1,2,2-tetrachloroethane-d2 (TCE-d2). In other words, it is to be understood that the material used for, and that amounts determined by, quantitative $^{13}C\{^1H\}$ NMR spectroscopy are based only on material that can be dissolved in 1,1,2,2-tetrachloroethane-d2 (TCE-d2); any non-dissolved material being removed and disregarded for the measurement.

Further, the mixed virgin polyethylene / recycled polyethylene composition according to the present invention may generally comprise metals and other elements, such as Fe, Ti, Zn, Cl and S, which originate from the recycled polyethylene fraction and as further described below.

The mixed virgin polyethylene / recycled polyethylene composition according to the present invention is characterized by excellent mechanical properties.

Accordingly, the mixed virgin polyethylene / recycled polyethylene composition according to the present invention has at least one, preferably all, of the following properties:

(i) an environmental stress crack resistance (ESCR) according to the Bell test, in accordance with IEC 60811-406, method B and as described herein of at least 1,000 h failure time, preferably at least 2,500 h failure time and more preferably at least 3,500 h failure time; such as in the range of from 1,000 to 20,000 h failure time;

(ii) a tear resistance, determined according to BS 6469 section 99.1 of at least 28 N/mm, preferably at least 29 N/mm and more preferably at least 30 N/mm; such as from 28 to 35 N/mm;

(iii) a strain hardening modulus, determined according to ISO 18488 and as described herein, of at least 18 MPa, preferably at least 19 MPa and more preferably at least 20 MPa; such as in the range of from 18 to 30 MPa;

(iv) a flexural modulus, determined according to ISO 178 method A, of less than 980 MPa, preferably less than 970 MPa and more preferably less than 950 MPa; such as in the range of from 700 to 980 MPa; and/or

(v) a Shore D hardness, measured after 3s according to ISO 868, Shore D 3s, of at least 55, preferably at least 56 and more preferably at least 57, such as in the range of from 56 to 65.

In some preferred embodiments, the mixed virgin polyethylene / recycled polyethylene composition according to the present invention has all the properties (i) to (v).

In some embodiments, the Shore D hardness (v) is less than 61.

According to the present invention, the mixed virgin polyethylene / recycled polyethylene composition comprises a recycled polyethylene fraction in an amount of 40 wt.-% or more, such as in the range of from 40 to 85 wt.-%, preferably

from 45 to 80 wt.-% and more preferably from 48 to 75 wt.-%, such as from 50 to 75 wt.-%, based on the total weight of the mixed virgin polyethylene / recycled polyethylene composition.

The virgin polyethylene fraction may be comprised in the mixed virgin polyethylene / recycled polyethylene composition in the range of from 15 to 60 wt.-%, preferably from 17 to 55 wt.-% and more preferably from 20 to 52 wt.-%, such as from 25 to 48 wt.-%, based on the total weight of the mixed virgin polyethylene / recycled polyethylene composition.

Additional ingredients may also be present in the mixed virgin polyethylene / recycled polyethylene composition as described below.

***Recycled polyethylene fraction***

According to the present invention, the recycled polyethylene fraction comprises at least the first recycled polyethylene component (rPE1).

In some embodiments, the recycled polyethylene fraction comprises, or consists of, the first recycled polyethylene component (rPE1).

In some other embodiments, the recycled polyethylene fraction comprises, or consists of, the first recycled polyethylene component (rPE1) and a second recycled polyethylene component (rPE2). In these embodiments, the weight ratio of the first recycled polyethylene component (rPE1) to the second recycled polyethylene component (rPE2) is preferably in the range of from 15:85 to 85:15.

*Recycled polyethylene component (rPE1)*

The (first) recycled polyethylene component (rPE1) is preferably present in an amount of 10 wt.-% or more, such as in the range of from 10 to 85 wt.-%, based on the total weight of the mixed virgin polyethylene / recycled polyethylene composition.

In some embodiments, the recycled polyethylene component (rPE1) is present in an amount of 20 wt.-% or more, such as in the range of from 20 to 85 wt.-%, based on the total weight of the mixed virgin polyethylene / recycled polyethylene composition.

The mixed virgin polyethylene / recycled polyethylene composition is tolerable to the different properties of the recycled polyethylene component (rPE1). Accordingly, the recycled polyethylene component (rPE1) may be characterized by a broad range of contamination, such as in the form of metals or other elements and/or inclusions determined by the OCS (Optical Control System) method. The recycled polyethylene component (rPE1) may also be characterized by a broad range of densities and melt flow ranges.

The recycled polyethylene component (rPE1) may have at least one of:

i1) a content of iron (Fe) of 200 ppm or less, such as in the range of from 10 to 200 ppm;

i2) a content of titanium (Ti) of 3,500 ppm or less, such as in the range of from 50 to 3,500 ppm;

i3) a content of zinc (Zn) of 300 ppm or less, such as in the range of from 10 to 300 ppm;

i4) a content of chlorine (Cl) of 1,200 ppm or less, such as in the range of from 100 to 1,200 ppm; and/or

i5) a content of sulfur (S) of 150 ppm or less, such as in the range of from 10 to 150 ppm;

determined by X-ray fluorescence (XRF) spectroscopy as described herein and based on the total weight of the recycled polyethylene component (rPE1); wherein a total content of Fe, Ti, Zn, Cl and S amounts to at least 10 ppm, preferably at least 500 ppm, such as in the range of from 10 to 5,350 ppm, preferably from 500 to 5,350 ppm, relative to the total weight of the recycled polyethylene component (rPE1).

In some embodiments, the total content of Fe, Ti, Zn, Cl and S amounts to at least 1,000 ppm, such as in the range of from 1,000 to 5,350 ppm, relative to the total weight of the recycled polyethylene component (rPE1).

The recycled polyethylene component (rPE1) preferably has, as determined by quantitative $^{13}C\{^{1}H\}$ NMR spectroscopy as described herein, a total amount of ethylene units (C2 units) of at least 88 wt.-%, such as in the range of from 88 to 99 wt.-%, more preferably from 89 to 98 wt.-% and still more preferably from 90 to 97 wt.-%; and a total amount of continuous propylene units (C3 units) in the range of from 0.1 to 6.0 wt.-%, more preferably from 0.2 to 5.7 wt.-% and still more preferably from 0.3 to 5.5 wt.-%.

The recycled polyethylene component (rPE1) may also have, as determined by quantitative $^{13}C\{^{1}H\}$ NMR spectroscopy as described herein, a total amount of C4 units in the range of from 0.1 to 5.0 wt.-%, preferably from 0.4 to 4.0 wt.-% and more preferably from 0.8 to 3.0 wt.-%, and/or a total amount of C6 units in the range of from 0.1 to 5.0 wt.-%,

preferably from 0.5 to 4.5 wt.-% and more preferably from 1.0 to 4.0 wt.-%.

The recycled polyethylene component (rPE1) preferably has a density (ISO 1183-1:2019) in the range of from 920 to 955 kg/m$^3$, more preferably from 923 to 954 kg/m$^3$.

The recycled polyethylene component (rPE1) preferably has a melt flow rate $MFR_2$ (ISO 1133:2022, 2.16 kg, 190 °C) in the range of from 0.20 to 1.50 g/10 min, and/or a melt flow rate MFRs (ISO 1133:2022, 5 kg, 190 °C) in the range of from 1.00 to 5.00 g/10 min.

The recycled polyethylene component (rPE1) may have a content of gel inclusions, determined by OCS as described herein:

- greater than 1,000 μm of at most 500/kg, preferably of at most 400/kg and more preferably of at most 300/kg, such as in the range of from 0 to 500/kg; and/or

- from 600 to 1,000 μm of at most 10,000/kg, preferably of at most 9,000/kg and more preferably of at most 8,000/kg, such as in the range of from 0 to 10,000/kg.

The recycled polyethylene component (rPE1) may have a content of contaminations, determined by OCS as described herein:

- greater than 1,000 μm of at most 1,000/kg, preferably of at most 950/kg and more preferably of at most 900/kg, such as in the range of from 0 to 1,000/kg; and/or

- from 600 to 1,000 μm of at most 25,000/kg, preferably of at most 22,000/kg and more preferably of at most 20,000/kg, such as in the range of from 0 to 25,000/kg.

The recycled polyethylene component (rPE1) may have a content of inclusions other than gels and contaminations ("others"), determined by OCS as described herein:

- greater than 1,000 μm of at most 50,000/kg, preferably of at most 45,000/kg and more preferably of at most 40,000/kg, such as in the range of from 0 to 50,000/kg; and/or

- from 600 to 1,000 μm of at most 100,000/kg, preferably of at most 95,000/kg and more preferably of at most 90,000/kg, such as in the range of from 0 to 100,000/kg.

The OCS measurement is described in detail in the method section herein. Accordingly, the three kinds of inclusions: gels, contaminations and "others" were detected based on their aspect ratio (ratio between length and width) and grey value, and divided into 4 size-classes (100-299 μm; 300-599 μm; 600-1000 μm; >1000 μm).

In some embodiments, the recycled polyethylene component (rPE1) is a recycled polyethylene component A having a density (ISO 1183-1:2019) in the range of from 920 to 935 kg/m$^3$; a melt flow rate $MFR_2$ (ISO 1133:2022, 2.16 kg, 190 °C) in the range of from 0.50 to 1.50 g/10 min, and/or a melt flow rate MFRs (ISO 1133:2022, 5 kg, 190 °C) in the range of from 1.50 to 5.00 g/10 min; as determined by quantitative $^{13}C\{^1H\}$ NMR spectroscopy as described herein, a total amount of ethylene units (C2 units) in the range of from 88 to 99 wt.-%; and a total amount of continuous propylene units (C3 units) in the range of from 0.1 to 3.0 wt.-%.

In some embodiments, the recycled polyethylene component (rPE1) is a recycled polyethylene component B having a density (ISO 1183-1:2019) in the range of from 936 to 950 kg/m$^3$; a melt flow rate $MFR_2$ (ISO 1133:2022, 2.16 kg, 190 °C) in the range of from 0.50 to 0.95 g/10 min, and/or a melt flow rate MFRs (ISO 1133:2022, 5 kg, 190 °C) in the range of from 1.50 to 3.50 g/10 min; as determined by quantitative $^{13}C\{^1H\}$ NMR spectroscopy as described herein, a total amount of ethylene units (C2 units) in the range of from 88 to 99 wt.-%; and a total amount of continuous propylene units (C3 units) in the range of from 0.1 to 4.0 wt.-%.

In some embodiments, the recycled polyethylene component (rPE1) is a recycled polyethylene component C having a density (ISO 1183-1:2019) in the range of from 940 to 955 kg/m$^3$; a melt flow rate $MFR_2$ (ISO 1133:2022, 2.16 kg, 190 °C) in the range of from 0.20 to 0.70 g/10 min, and/or a melt flow rate MFRs (ISO 1133:2022, 5 kg, 190 °C) in the range of from 1.00 to 2.50 g/10 min; as determined by quantitative $^{13}C\{^1H\}$ NMR spectroscopy as described herein, a total amount of ethylene units (C2 units) in the range of from 88 to 99 wt.-%; and a total amount of continuous propylene units (C3 units) in the range of from 0.1 to 6.0 wt.-%.

*Recycled polyethylene component (rPE2)*

The recycled polyethylene fraction may - additionally to the (first) recycled polyethylene component (rPE1) -

comprise a (second) recycled polyethylene component (rPE2).

The recycled polyethylene component (rPE2) may have the same features described above for the recycled polyethylene component (rPE1), but it may be a different commercial product or a different batch of the same commercial product.

Preferably, the recycled polyethylene component (rPE1) is one of the recycled polyethylene components A, B and C, and the recycled polyethylene component (rPE2) is also one of the recycled polyethylene components A, B and C, but different to the component used as rPE1.

In some particular embodiments, the recycled polyethylene component (rPE1) is the recycled polyethylene component A, and the recycled polyethylene component (rPE2) is the recycled polyethylene component B. In these embodiments, the weight ratio of the recycled polyethylene component A to the recycled polyethylene component B is in the range of from 15:85 to 85:15, such as from 20:80 to 80:20.

By the combination of two or more different recycled polyethylene components, the desired properties of the mixed virgin polyethylene / recycled polyethylene composition can be better adjusted.

Recycled polyethylene components as described herein are commercially available, e.g., such as the products under the trade name NAV from the Borealis Group.

Preferably, the recycled polyolefin fraction has the same properties in terms of density and melt flow rate and C2-C6 contents as defined above for the recycled polyethylene component (rPE1).

### *Virgin polyethylene fraction*

The mixed virgin polyethylene / recycled polyethylene composition according to the present invention comprises a virgin polyethylene fraction.

According to the present invention, the virgin polyethylene fraction comprises at least a first virgin polyethylene component (vPE1) in an amount of 15 wt.-% or more, such as in the range of from 15 to 60 wt.-%, preferably from 16 to 50 wt.% and more preferably from 17 to 40 wt.-%, based on the total weight of the mixed virgin polyethylene / recycled polyethylene composition.

In some embodiments, the virgin polyethylene fraction comprises, or consists of, only the first virgin polyethylene component (vPE1).

In some preferred embodiments, the virgin polyethylene fraction comprises, or consists of, the first virgin polyethylene component (vPE1) and a second virgin polyethylene component (vPE2). In these embodiments, the weight ratio of the first virgin polyethylene component (vPE1) to the second virgin polyethylene component (vPE2) is preferably in the range of from 70:30 to 30:70, more preferably from 60:40 to 40:60.

#### <u>*Virgin polyethylene component (vPE1)*</u>

According to the present invention, the (first) virgin polyethylene component (vPE1) has a melt flow rate MFRs (ISO 1133:2022, 5 kg, 190 °C) of up to 0.50 g/10 min, such as in the range of from 0.05 to 0.50 g/10 min, preferably from 0.10 to 0.45 g/10 min and more preferably from 0.15 to 0.40 g/10 min; and a density (ISO 1183-1:2019) in the range of from 942 to 975 kg/$m^3$, preferably from 943 to 970 kg/$m^3$, more preferably from 944 to 960 kg/$m^3$ and even more preferably from 945 to 955 kg/$m^3$.

The virgin polyethylene component (vPE1) preferably also has a melt flow rate $MFR_2$ (ISO 1133:2022, 2.16 kg, 190 °C) in the range of from 0.01 to 0.30 g/10 min, more preferably from 0.02 to 0.20 g/10 min and even more preferably from 0.03 to 0.10 g/10 min.

In some embodiments, the virgin polyethylene component (vPE1) has a melt flow rate $MFR_2$ (ISO 1133:2022, 2.16 kg, 190 °C) in the range of from 0.01 to 0.30 g/10 min and a density in the range of from 945 to 975 kg/$m^3$.

The virgin polyethylene component (vPE1) may be unimodal or multimodal, and preferably is bimodal.

The term *"bimodal"* as used herein means that the polymer consists of two polyethylene fractions, which have been produced under different polymerization conditions resulting in different (weight average) molecular weights and molecular weight distributions for the fractions. The form of the molecular weight distribution curve, i.e., the appearance of the graph of the polymer weight fraction as a function of its molecular weight, of a bimodal polymer will show two maxima or is typically distinctly broadened in comparison with the curves for the individual fractions.

Preferably, the virgin polyethylene component (vPE1) is a bimodal polyethylene copolymer comprising a polyethylene homopolymer and a polyethylene copolymer or two polyethylene copolymers. *"Polyethylene homopolymer"* and *"polyethylene copolymer"* are to be understood as defined above. Preferably, the bimodal polyethylene copolymer is a copolymer of ethylene and one or more comonomer units selected from alpha-olefins having from 4 to 6 carbon atoms, preferably being 1-hexene. In some particular embodiments, the virgin polyethylene component (vPE1) is a bimodal polyethylene copolymer comprising ethylene units and from 0.5 to 3.0 wt.-%, preferably from 0.8 to 2.0 wt.-% and even more preferably from 1.0 to 1.5 wt.-%, of 1-hexene units, based on the total weight of the virgin polyethylene component

(vPE1) and determined by quantitative $^{13}C\{^1H\}$ NMR spectroscopy as described herein.

Preferably, the virgin polyethylene component (vPE1) has a strain hardening modulus, determined according to ISO 18488 as described herein, of at least 50 MPa, such as in the range of from 50 to 130 MPa, preferably from 60 to 120 MPa.

Strain hardening modulus correlates with the slow crack growth resistance of a polymer (Kurelec, L., Teeuwen, M., Schoffeleers, H. & Deblieck, R. Strain hardening modulus as a measure of environmental stress crack resistance (ESCR) of high density polyethylene. Polymer 46, 6369-6379, (2005)). Thus, the relatively high strain hardening modulus of the virgin polyethylene component (vPE1) contributes to an improvement of the slow crack growth resistance of the mixed virgin polyethylene / recycled polyethylene composition.

The virgin polyethylene component (vPE1) may further have the advantageous properties of a high complex viscosity at angular frequency $\omega$ of 0.05 rad/s ($eta_{0.05}$) in the range of from 100,000 to 250,000 Pa.s, preferably from 120,000 Pa.s to 230,000 Pa.s and more preferably from 150,000 to 200,000 Pa.s; and a shear thinning factor (STF) ($eta_{0.05}/eta_{300}$), defined as the ratio of the complex viscosities $eta_{0.05}$ and $eta_{300}$ at 190 °C within a frequency range of from 0.01 and 600 rad/s according to ISO 6721-1 and 6721-10, determined as described herein, in the range of from 80 to 200, preferably from 90 to 180 and more preferably from 100 to 160. The shear thinning factor (STF) indicates the processability of the polyethylene material.

*Virgin polyethylene component (vPE2)*

In some preferred embodiments, the virgin polyethylene fraction additionally comprises a (second) virgin polyethylene component (vPE2).

Preferably, the virgin polyethylene component (vPE2) has a melt flow rate $MFR_2$ (ISO 1133:2022, 2.16 kg, 190 °C) in the range of from more than 0.30 to 1.00 g/10 min, such as from 0.35 to 1.00g/10 min, more preferably from 0.40 to 0.90g/10 min; and a density (ISO 1183-1:2019) in the range of from 940 to 975 kg/m$^3$, preferably from 941 to 970 kg/m$^3$, more preferably from 942 to 960 kg/m$^3$ and even more preferably from 943 to 950 kg/m$^3$.

The virgin polyethylene component (vPE2) preferably has a melt flow rate MFRs (ISO 1133:2022, 5 kg, 190 °C) in the range of from 0.60 to 3.50 g/10 min, more preferably from 0.80 to 3.20 g/10 min and even more preferably from 1.00 to 3.00 g/10 min.

The virgin polyethylene component (vPE2) may be unimodal or multimodal, and preferably is bimodal.

Preferably, the virgin polyethylene component (vPE2) is a bimodal polyethylene copolymer comprising a polyethylene homopolymer and a polyethylene copolymer or two polyethylene copolymers. Preferably, the bimodal polyethylene copolymer is a copolymer of ethylene and one or more comonomer units selected from alpha-olefins having from 4 to 6 carbon atoms, preferably being 1-butene. In some particular embodiments, the virgin polyethylene component (vPE2) is a bimodal polyethylene copolymer comprising ethylene units and from 1.0 to 3.5 wt.-%, preferably from 1.0 to 3.0 wt.-% and more preferably from 1.5 to 2.5 wt.-%, of 1-butene units, based on the total weight of the virgin polyethylene component (vPE2) and determined by quantitative $^{13}C\{^1H\}$ NMR spectroscopy as described herein.

The virgin polyethylene component (vPE2) may have a lower strain hardening modulus than the virgin polyethylene component (vPE1), preferably being in the range of from 15 to 60 MPa, more preferably from 20 to 50 MPa, as determined according to ISO 18488 as described herein.

Suitable virgin polyethylene components are commercially available and are also obtainable by processes described in the art, e.g., in EP 1327664 A1 (bimodal high-density polyethylene; examples section) or EP 4023712 A1 (Polymer B).

*Further virgin polyethylene components*

The mixed virgin polyethylene / recycled polyethylene composition may comprise further virgin polyethylene components in the virgin polyethylene fraction, e.g., vPE3, vPE4 and/or vPE5, etc. For these optional components, it may be advantageous in order to obtain the mixed virgin polyethylene / recycled polyethylene composition according to the present invention that these components (singly or combined) share at least some of the properties with the virgin polyethylene components (vPE1) and (vPE2).

The mixed virgin polyethylene / recycled polyethylene composition may further comprise virgin polyethylene components that result from masterbatches of additives and/or pigments. These virgin polyethylene components are usually present, if at all, only in relatively small amounts in the composition and, thus, their properties are not of high relevance for the mixed virgin polyethylene / recycled polyethylene composition according to the present invention.

***Further ingredients***

In addition to the polyethylene fractions, the mixed virgin polyethylene / recycled polyethylene composition may

comprise additives and/or pigments.

The total amount of additives may be in the range of from 0.0 to 5.0 wt.-%, preferably from 0.01 to 3.00 wt.-% and more preferably from 0.10 to 2.00 wt.-%, based on the total weight of the mixed virgin polyethylene / recycled polyethylene composition.

Suitable additives are common additives for utilization with polyolefins, such as stabilizers (e.g. antioxidant agents, UV-stabilizers, metal deactivators, etc.), antistatic agents, and utilization agents (such as processing aid agents).

In some embodiments, the mixed virgin polyethylene / recycled polyethylene composition according to the present invention comprises at least one antioxidant and/or at least one metal deactivator, preferably at least one antioxidant and at least one metal deactivator. Suitable antioxidants may be selected from phenolic antioxidants, phosphorous antioxidants and combinations thereof. Suitable metal deactivators may be substituted aromatic carboxylic acid ester compounds, preferably an aromatic carboxylic acid ester compound comprising an oxamide linkage, in particular any compound which is derived from an alkyl-substituted hydroxyphenyl carboxylic acid ester compound according to the general formula (I)

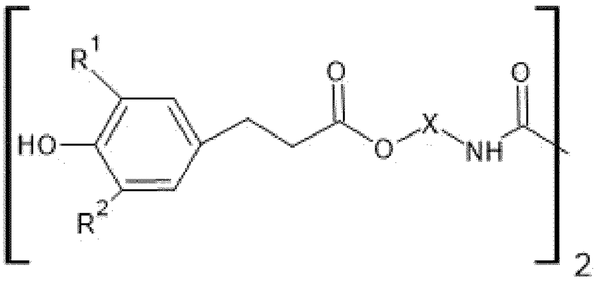

(I)

wherein

each of $R^1$ and $R^2$ is independently a $C_1$-$C_8$ alkyl moiety, preferably a $C_1$-$C_4$ alkyl moiety, more preferably a $C_3$-$C_4$ alkyl moiety, such as a tert-$C_4$ alkyl,

wherein $R^1$ and $R^2$ can be the same or different, and

each X is independently a $C_1$-$C_{12}$ alkylene moiety, preferably a $C_1$-$C_8$ alkylene moiety, more preferably a $C_1$-$C_6$ alkylene moiety, even more preferably a $C_1$-$C_4$ alkylene moiety, most preferably a $C_2$ alkylene moiety, wherein X can be the same or different, preferably is the same.

The composition according to the present invention may further comprise one or more pigments. In the context of the present invention, pigments, such as carbon black, are not included in the definition of additives, but are considered separately.

Preferably, the mixed virgin polyethylene / recycled polyethylene composition comprises at least one pigment, preferably carbon black.

Pigments, such as carbon black, impart (black) color to the polyethylene composition and, at the same time, usually protect the composition from UV radiation. Further, the addition of pigments, preferably carbon black, increases the density of the polyethylene composition compared to that of a composition not comprising any pigments.

The mixed virgin polyethylene / recycled polyethylene composition according to the present invention may comprise pigments, preferably carbon black, in an amount in the range of from 0.0 to 5.0 wt.-%, preferably from 1.0 to 4.0 wt.-% and more preferably from 2.0 to 3.0 wt.-%.

Pigments, preferably carbon black, may be added to the composition in the form of pure pigment, preferably carbon black, or in the form of a masterbatch comprising the pigment, preferably carbon black, and a polymeric carrier.

Preferably, pigments, such as carbon black, are added in the form of a masterbatch, i.e., as a mixture of e.g., a polyethylene carrier and carbon black, in which carbon black (or another pigment) is present in an amount in the range of e.g., from 30 to 50 wt.-%. In the sense of the present invention, the weight of the polyethylene carrier in the masterbatch does not count to the amount of the pigments. The respective amount of the polyethylene carrier is counted to the total amount of the virgin polyethylene fraction, even if the masterbatch is added to the composition and not to the virgin polyethylene fraction.

In some embodiments, the mixed virgin polyethylene / recycled polyethylene composition according to the present invention comprises, or consists of, from 40 to 85 wt.-% of a recycled polyethylene fraction, from 15 to 60 wt.-% of a

virgin polyethylene fraction, from 0.05 to 5.0 wt.-% of additives, selected from antioxidant agents, UV-stabilizers, antistatic agents, metal deactivators and/or processing aid agents, and from 0.05 to 5.0 wt.-% of one or more pigment(s), based on the total weight of the mixed virgin polyethylene / recycled polyethylene composition.

In some particular embodiments, the mixed virgin polyethylene / recycled polyethylene composition according to the present invention comprises, or consists of, from 48 to 75 wt.-%, such as from 50 to 75 wt.-%, of a recycled polyethylene fraction, from 20 to 52 wt.-%, such as from 25 to 48 wt.-%, of a virgin polyethylene fraction, from 0.05 to 0.50 wt.-% of at least one antioxidant agent, from 0.05 to 0.50 wt.-% of at least one metal deactivator, and from 1.0 to 4.0 wt.-% of one or more pigment(s), preferably carbon black, based on the total weight of the mixed virgin polyethylene / recycled polyethylene composition.

*Method of preparing the mixed virgin polyethylene / recycled polyethylene composition*

The present invention also relates to a method of preparing the mixed virgin polyethylene / recycled polyethylene composition according to the present invention, comprising the steps of melting, blending and extruding the recycled polyethylene fraction and the virgin polyethylene fraction in an extruder in the optional presence of additives.

Preferably, the method comprises melting, blending, extruding and pelletizing the above-cited ingredients in a co-rotating twin screw extruder at a screw speed in the range of from 100 to 600 rpm, more preferably from 150 to 500 rpm, even more preferably from 200 to 400 rpm; and at a barrel temperature in the range of from 140 to 270 °C, preferably from 160 to 260 °C, more preferably from 170 to 250°C and still more preferably from 180 to 240°C.

For the present invention, it is not important that the recycled polyethylene fraction and the virgin polyethylene fraction are each formed from the respective polyethylene components for the preparation of the mixed virgin polyethylene / recycled polyethylene composition. The polyethylene components of these fractions may be combined in any order for the method according to the present invention.

*Article and Use*

The mixed virgin polyethylene / recycled polyethylene composition according to the present invention may be used for the production of articles, in particular for the production of wire and/or cable jacketing.

Thus, the present invention also relates to an article, preferably a wire and/or cable jacketing, comprising the mixed virgin polyethylene / recycled polyethylene composition according to the present invention.

Further, the invention relates to the use of the mixed virgin polyethylene / recycled polyethylene composition according to the present invention for wire and/or cable jacketing applications.

## Examples

### *Measurement methods*

#### a) Melt Flow Rate (MFR)

Melt flow rates were measured with a load of 2.16 kg ($MFR_2$), 5.0 kg (MFRs) or 21.6 kg ($MFR_{21}$) at 190 °C as indicated. The melt flow rate is that quantity of polymer in grams which the test apparatus standardized to ISO 1133:2022 extrudes within 10 minutes at a temperature of 190 °C under a load of 2.16 kg, 5.0 kg or 21.6 kg.

#### b) Density

For determining the density of non-cellular plastics, the ISO 1183-1:2019 standard method A immersion method is used (Archimedean principle). A specimen is weighed in air and immersed in a liquid (normally iso-dodecane), whose density is lower than that of the specimen. The value of this force is the same as that of the weight of the liquid displaced by the volume of the specimen.

This test is done on compression molded plates of PE (polyethylene). For compression molding process the following parameters are used:

| PE | Time [s] | Temperature PC] | Pressure Hydraulic [bar] | Mould [N/cm$^2$] |
|---|---|---|---|---|
| Preheating | 360 | 180 | 5 | 7 |
| Moulding | 300 | 180 | 50 | 65 |
| | 300 | 180 | 200 | 262 |

(continued)

| PE | Time [s] | Temperature PC] | Pressure Hydraulic [bar] | Mould [N/cm²] |
|---|---|---|---|---|
| Cooling | 840 | 23 | | |
| | 15 K/min | | 200 | 262 |
| | **<40°C** demoulding temperature | | | |

The specimens are conditioned for at least 16 h at 23±2°C after compression molding (PE) and density measurement is conducted 24±2 h after compression molding (PE).

Isopropanol is used as immersion liquid, when the standard immersion liquid iso-dodecane, which comes in contact with the specimen during the measurement, has an effect on the specimen (e.g. swelling the specimen).

Test temperature: 23±2°C
Immersion liquid: isododecane or isopropanol
Buoyancy correction: yes

**c) NMR measurement**

**NMR measurement of recycled polyethylene component and the mixed virgin polyethylene / recycled polyethylene composition**

Quantitative $^{13}C\{^1H\}$ NMR spectra were recorded in the solution-state using a Bruker Avance III 400MHz NMR spectrometer operating at 400.15 and 100.62 MHz for $^1H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of 1,1,2,2-tetrachloroethane-d2 (TCE-$d_2$) along with chromium-(III)-acetylacetonate ($Cr(acac)_3$) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme {zhou07, busico07}. A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. Characteristic signals corresponding to polyethylene with different short chain branches (B1, B2, B4, B5, B6plus) and polypropylene were observed {randall89, brandolini00}.

Characteristic signals corresponding to the presence of polyethylene containing isolated B1 branches (starB1 33.3 ppm), isolated B2 branches (starB2 39.8 ppm), isolated B4 branches (twoB4 23.4 ppm), isolated B5 branches (threeB5 32.8 ppm), all branches longer than 4 carbons (starB4plus 38.3 ppm) and the third carbon from a saturated aliphatic chain end (3s 32.2 ppm) were observed. The intensity of the combined ethylene backbone methine carbons (ddg) containing the polyethylene backbone carbons (dd 30.0 ppm), γ-carbons (g 29.6 ppm) the 4s and the threeB4 carbon (to be compensated for later on) is taken between 30.9 ppm and 29.3 ppm excluding the Tββ from polypropylene. The amount of C2 related carbons was quantified using all mentioned signals according to the following equation:

$fC_{C2total}$ = (Iddg -ItwoB4) + (IstarB1 *6) + (IstarB2*7) + (ItwoB4*9) + I(threeB5*10) + ((IstarB4plus-ItwoB4-IthreeB5)*7) + (I3s*3)

Characteristic signals corresponding to the presence of polypropylene (PP, continuous C3)) were observed at 46.7 ppm, 29.0 ppm and 22.0 ppm. The amount of PP related carbons was quantified using the integral of Sαα at 46.6 ppm:

$$fC_{PP} = I_{S\alpha\alpha} * 3$$

The weight percent of the C2 fraction and the polypropylene can be quantified according to the following equations:

$$wt_{C2fraction} = fC_{C2total} * 100 / (fC_{C2total} + fC_{PP})$$

$$wt_{PP} = fC_{PP} * 100 / (fC_{C2total} + fC_{PP})$$

Characteristic signals corresponding to various short chain branches were observed and their weight percentages quantified as the related branch would be an alpha-olefin, starting by quantifying the weight fraction of each:

$$fwtC2 = fC_{C2total} – ((IstarB1*3) – (IstarB2*4) – (ItwoB4*6) – (IthreeB5*7)$$

$$fwtC3\ (isolated\ C3) = IstarB1*3$$

$$fwtC4 = IstarB2*4$$

$$fwtC6 = ItwoB4*6$$

$$fwtC7 = IthreeB5*7$$

Normalization of all weight fractions leads to the amount of weight percent for all related branches:

$$fsum_{wt.-\%total} = fwtC2 + fwtC3 + fwtC4 + fwtC6 + fwtC7 + fC_{PP}$$

$$wtC2total = fwtC2 * 100 / fsum_{wt.-\%total}$$

$$wtC3total = fwtC3 * 100 / fsum_{wt.-\%total}$$

$$wtC4total = fwtC4 * 100 / fsum_{wt.-\%total}$$

$$wtC6total = fwtC6 * 100 / fsum_{wt.-\%total}$$

$$wtC7total = fwtC7 * 100 / fsum_{wt.-\%total}$$

It is to be understood that the material used for, and amounts determined by, quantitative $^{13}C\{^1H\}$ NMR spectroscopy are based only on material that can be dissolved in 1,1,2,2-tetrachloroethane-d2 (TCE-d2); any non-dissolved material being removed.

References:

zhou07 Zhou, Z., Kuemmerle, R., Qiu, X., Redwine, D., Cong, R., Taha, A., Baugh, D. Winniford, B., J. Mag. Reson. 187 (2007) 225
busico07 Busico, V., Carbonniere, P., Cipullo, R., Pellecchia, R., Severn, J., Talarico, G., Macromol. Rapid Commun. 2007, 28, 1128
singh09 Singh, G., Kothari, A., Gupta, V., Polymer Testing 28 5 (2009), 475
randall89 J. Randall, Macromol. Sci., Rev. Macromol. Chem. Phys. 1989, C29, 201.
brandolini00 A. J. Brandolini, D. D. Hills, NMR Spectra of Polymers and Polymer Additives, Marcel Dekker Inc., 2000.

**NMR measurement of virgin polyethylene component**

Quantitative nuclear-magnetic resonance (NMR) spectroscopy was used to quantify the comonomer content of the virgin polymer.

Quantitative $^{13}C\{^1H\}$ NMR spectra recorded in the molten state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal (δ) at 30.00 ppm {randall89}.

Quantification of C6 content:

Characteristic signals corresponding to the incorporation of 1-hexene were observed {randall89}. The amount of isolated 1-hexene incorporated in EEHEE sequences was quantified using the integral of the *B4 sites ($I_{*B4}$) at 38.3 ppm accounting for the number of reporting sites per comonomer:

$$H = I_{*B4}$$

Characteristic signals resulting from saturated end-groups were observed. The content of such saturated end-groups was quantified using the average of the integral of the signals at 22.8 ppm and 32.2 ppm assigned to the 2s ($I_{2S}$) and 3s ($I_{3S}$) sites respectively:

$$S = (1/2)*( I_{2S} + I_{3S} )$$

The amount of ethylene was quantified using the integral of the bulk methylene sites ($I_\delta$) at 30.00 ppm. This integral included the γ site as well as the 3B4 sites from 1-hexene.

The total ethylene content was calculated based on the bulk integral and compensating for the observed 1-hexene sequence and end-group:

$$E = (I_\delta / 2) + (3*H/2) - (H/2) + (3*S/2)$$

The total mole fraction of 1-hexene in the polymer was then calculated as:

$$fH = H / ( E + H )$$

The mole percent comonomer incorporation was calculated from the mole fraction:

$$H [mol\%] = 100 * fH$$

The weight percent comonomer incorporation was calculated from the mole fraction:

$$H [wt\%] = 100 * ( fH * 84.16 ) / ( (fH * 84.16) + ((1-fH) * 28.05) )$$

Quantification of C4 content:

Characteristic signals corresponding to the incorporation of 1-butene were observed (randall89) and all contents calculated with respect to all other monomers present in the polymer with the limit of quantification being 0.2 mol% of butene.

Characteristic signals resulting from isolated 1-butene incorporation i.e. EEBEE comonomer sequences, were observed. Isolated 1-butene incorporation was quantified using the integral of the signal at 39.8 ppm assigned to the *B2 sites, accounting for the number of reporting sites per comonomer:

$$B = I_{*B2}$$

When characteristic signals resulting from consecutive 1-butene incorporation i.e. EBBE comonomer sequences were observed, such consecutive 1-butene incorporation was quantified using the integral of the signal at 39.3 ppm assigned to the $\alpha\alpha B2B2$ sites accounting for the number of reporting sites per comonomer:

$$BB = 2 * I\alpha\alpha_{B2B2}$$

When characteristic signals resulting from non-consecutive 1-butene incorporation i.e. EBEBE comonomer sequences were also observed, such non-consecutive 1-butene incorporation was quantified using the integral of the signal at 24.7 ppm assigned to the $\beta\beta B2B2$ sites accounting for the number of reporting sites per comonomer:

$$BEB = 2 * I\beta\beta_{B2B2}$$

Due to the overlap of the *B2 and *βB2B2 sites of isolated (EEBEE) and non-consecutively incorporated (EBEBE) 1-butene respectively the total amount of isolated 1-butene incorporation is corrected based on the amount of non-consecutive 1-butene present:

$$B = I_{*B2} - 2 * I\beta\beta_{B2B2}$$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences:

$$B_{total} = B + BB + BEB$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The total ethylene comonomer content was calculated using the integral of the bulk methylene sites ($I_\delta$) at 30.00 ppm and accounting for ethylene units present in other observed comonomer sequences or end-groups:

$$E = (I_\delta / 2) + (5/2)*B + (7/2)*BB + (9/2)*BEB + (3/2)*S$$

The total mole fraction of 1-butene in the polymer was then calculated as:

$$fB = B_{total} / ( E + B_{total} )$$

The total comonomer incorporation of 1-butene in mole percent was calculated from the mole fraction in the usual manner:

$$B [mol\%] = 100 * fB$$

The total comonomer incorporation of 1-butene in weight percent was calculated from the mole fraction in the standard manner:

$$B [wt\%] = 100 * ( fB * 56.11) / ( (fB * 56.11) + ((1 - fB) * 28.05) )$$

References:

randall89 J. Randall, Macromol. Sci., Rev. Macromol. Chem. Phys. 1989, C29, 201.
klimke06 Klimke, K., Parkinson, M., Piel, C., Kaminsky, W., Spiess, H.W., Wilhelm, M., Macromol. Chem. Phys.

2006;207:382.
parkinson07 Parkinson, M., Klimke, K., Spiess, H.W., Wilhelm, M., Macromol. Chem. Phys. 2007;208:2128.
pollard04 Pollard, M., Klimke, K., Graf, R., Spiess, H.W., Wilhelm, M., Sperber, O., Piel, C., Kaminsky, W., Macromolecules 2004;37:813.
filip05 Filip, X., Tripon, C., Filip, C., J. Mag. Resn. 2005, 176, 239
griffin07 Griffin, J.M., Tripon, C., Samoson, A., Filip, C., and Brown, S.P., Mag. Res. in Chem. 2007 45, S1, S198.
castignolles09 Castignolles, P., Graf, R., Parkinson, M., Wilhelm, M., Gaborieau, M., Polymer 50 (2009) 2373.

**d) Tensile properties**

**Tensile testing of specimens with/without weathering: L01 (lab 01) results**

5A ISO 527-2:2012 dog bone specimens were milled from compression molded plaques of 2 mm thickness. The compression molding was conducted according to ISO 17855-2:2023 but at a molding temperature of 200°C. For evaluation of resistance to weathering, the specimens were exposed to a xenon-arc lamp light following the standard ISO 4892-2:2013 + Amd 1:2021 "Methods of exposure to laboratory light sources", method a (humidification of the chamber air). The machine used for the conditioning was an Atlas - Ci5000 weatherometer, with the following conditions:

| | |
|---|---|
| Machine: | Atlas Ci5000 WEATHER-OMETER |
| Irradiance @ 300-400nm: | 60 $W/m^2$ |
| Irradiance @ 340nm: | 0.5 $W/m^2$ |
| Black standard temperature: | 65 +/- 2 °C |
| Air temperature | 38 +/- 3 °C |
| Relative humidity: | 70% |
| Rain cycle: | 102 min dry, followed by 18min rain. |

After exposure for 1000 hours, the specimens were taken out. Tensile testing was conducted according to ISO 527-2:2012 at 23±2°C and 50±10% humidity to determine the tensile properties of the specimens with/without exposure. A test speed of 50 mm/min was used to measure stress at break and strain at break.

**Tensile testing of specimens with/without thermal ageing: L02 (Lab 02) results**

Dog bone specimens of 5A were prepared according to ISO 527-2/5A by die cutting from compression moulded plaques of 2mm' thickness. All specimens were conditioned for at least 16 hours at 23°C and 50% relative humidity before testing. Tensile properties were measured according to ISO 527-1/2 at 23°C and 50% relative humidity with Alwetron R24, 1kN load cell. Tensile testing speed was 50mm/min, grip distance was 50mm and gauge length was 20mm. 5A Specimen were tested before and after ageing of 5A specimen at 100°C, after 10 days (240h) or at 110 °C after 14 days (336h).

**e) Element content**

The instrument used for the XRF measurements was a wavelength dispersive Zetium (2,4kW) from Malvern Panalytical. The instrument was calibrated with polyolefin based standard sets from Malvern Panalytical i.e Toxel (for Cu and Pb), RoHS (for Cl) and custom set of calibration standards from Malvern Panalytical according to the following table for Ti, S and Zn:

| Elements | range (ppm) |
|---|---|
| S | 0 - 281 |
| Ti | 0 - 273 |
| Zn | 0 - 576 |

Elements which are not covered by standards (Fe, Co and Mo), or the content is outside of the calibrated standard range, are then analyzed with a semi-quantitative mode (software Omnian from Malvern Panalytical). For these results no LCDs or LOQs are available. If a peak is visible in the scan, it is matched, analyzed and calculated. If no peak is visible in the area of the element, it is commented as "not detected". The CH content needed to run the semiquantitative evaluation with

Omnian was estimated by the software itself.

The analyses are done under vacuum on a plaque with a diameter of 40 mm and a thickness of 2 mm.

**f) Optical Control Systems (OCS)**

The cast film samples were produced and optically examined on a small-scale laboratory cast film line with installed camera detection from Optical Control Systems GmbH.

The line consisted of an extruder with a Ø 25 mm screw with an LID ration of 25. The extruder temperature was set at 190-210 °C, the melt temperature was 207 °C. The extruder was followed by a die with a width of 150 mm and a fixed die gap of 0.5 mm. The film was produced with a thickness of 100 μm During the extrusion the chill-roll temperature was set at 50 °C. The spots of the film were detected and counted on $5m^2$ of the film during the extrusion process with reflection light and a 4096 pixel camera. During the measurement a LED light source is used. The resolution of the camera is x/y 25 μm on film. The gels, contaminations and others were divided into 4 size-classes (100-299 μm; 300-599 μm; 600-1000 μm; >1000 μm) and the results are presented as the number of defects per kilogram (1/kg), with a fixed density setting of 925 $kg/m^3$ for all tested materials.

If the ratio between length and width of the detected spots is not more than 4.5, the spots are categorized as "gels" (having pixels with grey value of not more than 50% but more than 10% of the average grey value) or "contaminations" (having pixels with grey value of not more than 10% of the average grey value). If the ratio between length and width of the detected spots is greater than 4.5 and their pixels have grey value of not more than 50% of the average grey value, the spots are categorized as "Others".

**g) Xylene insoluble amount (XHU)**

The xylene hot insoluble amount (XHU) is analyzed according to ISO 10147:2011. Therefore, 1 g of the sample is weighed out exactly to 0.1 mg ($m_1$) and placed in a pouch made of stainless-steel mesh of the following material ("stainless steel quality 1.4401"). The pouch with polymer sample is weighed out exactly to 0.1 mg ($m_2$) and placed in a round flask filled with 700 mL xylene (ortho- or para-xylene, with a purity chromatography >98%). The xylene is kept under reflux conditions for 5 h. The pouch containing the insoluble matter is taken out of the flask, washed from the polymer solution residues with a fresh portion of 700 mL xylene under reflux conditions for another 30 minutes. Afterwards the pouch is taken out of the flask, dried under vacuum at 90 °C to constant mass. After being cooled to room temperature in a desiccator, the pouch is weighed out exactly to the nearest 0.1 mg (ms).

$$\%XHU = \frac{m_3 - (m_2 - m_1)}{m_1} * 100$$

XHU = Xylene hot insoluble amount
$m_1$ = sample weight in g
$m_2$ = weight of pouch with the sample in g
$m_3$ = weight of pouch with the insoluble residue in g

By evaporating the xylene from the xylene solution, the xylene hot soluble fraction is obtained.

**h) Environmental Stress Cracking Resistance (Bell test)**

By the term ESCR (environmental stress cracking resistance) is meant the resistance of the polymer to crack formation under the action of mechanical stress and a reagent in the form of a surfactant. The ESCR was determined in accordance with IEC 60811-406, method B. The reagent employed was 10 weight% Igepal CO 630 in water. The materials were prepared according to instructions for HDPE as follows: The materials were pressed at 165 °C to a thickness of 1.75-2.00 mm. The notch was 0.30 - 0.40 mm deep. In the results, a value of "0" means that the sample failed during preparation.

**i) Flexural modulus**

The flexural modulus was determined according to ISO 178 method A (3-point bending test) on specimens of 80 mm × 10 mm × 4 mm. Following the standard, a test speed of 2mm/min and a span length of 16 x thickness was used. The testing temperature was 23 ± 2° C. For specimen preparation, compression moulding was carried out according to ISO 17855-2.

**j) Impact strength (Charpy NIS)**

Charpy notched impact strength (NIS) was determined according to ISO 179-1/1eA on notched specimen of 80 mm $\times$10 mm $\times$ 4 mm (compression moulded specimen according to ISO 179-1/1eA). Testing temperature was 0$\pm$2°C, -20$\pm$2°C or -30$\pm$2°C. Compression moulding was carried out according to ISO 17855-2.

**k) Strain hardening (SH) modulus**

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, $\lambda$, is between 8 and 12.

The true strain, $\lambda$, is calculated from the length, l (mm), and the gauge length, l0 (mm), as shown by Equation 1.

$$\lambda = \frac{l}{l_0} = 1 + \frac{\Delta l}{l_0} \qquad (1)$$

where $\Delta$l is the increase in the specimen length between the gauge marks, (mm). The true stress, $\sigma$true (MPa), is calculated according to formula 2, assuming conservation of volume between the gauge marks:

$$\sigma_{true} = \sigma_n \lambda \qquad (2)$$

where $\sigma$n is the engineering stress.

The Neo-Hookean constitutive model (Equation 3) is used to fit the true strain-true stress data from which <Gp> (MPa) for 8 < $\lambda$ < 12 is calculated.

$$\sigma_{true} = \frac{<Gp>}{20}\left(\lambda^2 - \frac{1}{\lambda}\right) + C \qquad (3)$$

where C is a mathematical parameter of the constitutive model describing the yield stress extrapolated to $\lambda$ = 0.

Initially five specimens were measured. If the variation coefficient of <Gp> was greater than 2,5 %, then two extra specimens were measured. In case straining of the test bar takes place in the clamps the test result is discarded.

The PE granules of materials were compression moulded in sheets of 0.30 mm thickness according to the press parameters as provided in ISO 1872-2, Table 2.

After compression moulding of the sheets, the sheets were annealed to remove any orientation or thermal history and maintain isotropic sheets. Annealing of the sheets was performed for 1 h in an oven at a temperature of (120 $\pm$ 2) °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given in Table 1.

Table 1: Dimensions of Modified ISO 37:1994 Type 3

| Dimension | | Size (mm) |
|---|---|---|
| L | start length between clamps | 30.0 +/- 0.5 |
| l0 | Gauge length | 12.5 +/- 0.1 |
| l1 | Prismatic length | 16.0 +/- 1.0 |
| l3 | Total length | 70 |
| R1 | Radius | 10.0 +/- 0.03 |
| R2 | Radius | 8.06 +/- 0.03 |
| b1 | Prismatic width | 4.0 +/- 0.01 |
| b2 | Clamp width | 20.0 +/- 1.0 |

(continued)

| Dimension | | Size (mm) |
|---|---|---|
| h | Thickness | 0.30 + 0.05/0.30 - 0.03 |

The punching procedure is carried out in such a way that no deformation, crazes or other irregularities are present in the test pieces.
The thickness of the samples was measured at three points of the parallel area of the specimen; the lowest measured value of the thickness of these measurements was used for data treatment.
The following procedure is performed on a universal tensile testing machine having controlled temperature chamber and non-contact extensometer:

1. Condition the test specimens for at least 30 min in the temperature chamber at a temperature of (80 ± 1) °C prior to starting the test.

2. Clamp the test piece on the upper side.

3. Close the temperature chamber.

4. Close the lower clamp after reaching the temperature of (80 ± 1) °C.

5. Equilibrate the sample for 1 min between the clamps, before the load is applied and measurement starts.

6. Add a pre-load of 0.5 N at a speed of 5 mm/min.

7. Extend the test specimen along its major axis at a constant traverse speed (20 mm/min) until the sample breaks. During the test, the load sustained by the specimen is measured with a load cell of 200 N. The elongation is measured with a non-contact extensometer.

**l) Tear resistance**

Tear resistance was measured at 23°C on compression moulded plaques of 1 mm thickness according to BS 6469 section 99.1. A test piece with a cut was used to measure the tear force by means of a tensile testing machine. The tear resistance is calculated by dividing the maximum force needed to tear the specimen by its thickness.

m) **Dynamic Rheological Measurements**

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C for PE, applying a frequency range between 0.01 and 600 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$(t) = \gamma_0 \sin(\omega t) \qquad (1)$$

If the applied strain is within the linear viscoelastic regime, the resulting sinusoidal stress response can be given by

$$(t) = \sigma_0 \sin(\omega t + \delta) \qquad (2)$$

where

$\sigma_0$ and $\gamma_0$ are the stress and strain amplitudes, respectively

$\omega$ is the angular frequency

$\delta$ is the phase shift (loss angle between applied strain and stress response)

t is the time.

Dynamic test results are typically expressed by means of several different rheological functions, namely the shear storage modulus G', the shear loss modulus, G", the complex shear modulus, G*, the complex shear viscosity, η*, the dynamic shear viscosity, η ', the out-of-phase component of the complex shear viscosity η" and the loss tangent, tan δ which can be expressed as follows:

$$G' = \frac{\sigma_0}{\gamma_0}\cos\delta \ [\mathrm{Pa}] \quad (3)$$

$$G' = \frac{\sigma_0}{\gamma_0}\sin\delta \ [\mathrm{Pa}] \quad (4)$$

$$G^* = G' + iG'' \ [\mathrm{Pa}] \quad (5)$$

$$\eta^* = \eta' - i\eta'' \ [\mathrm{Pa.s}] \quad (6)$$

$$\eta' = \frac{G''}{\omega} \ [\mathrm{Pa.s}] \quad (7)$$

$$\eta'' = \frac{G'}{\omega} \ [\mathrm{Pa.s}] \quad (8)$$

The values of storage modulus (G'), loss modulus (G"), complex modulus (G*) and complex viscosity (η*) were obtained as a function of frequency (ω). Thereby, e.g. η*0.05rad/s (Eta* for (ω=0.05 rad/s), or $Eta_{0.05}$) is used as abbreviation for the complex viscosity at the frequency of 0.05 rad/s; η*300rad/s (Eta* for (ω=300 rad/s) or $Eta_{300}$), is used as abbreviation for the complex viscosity at the frequency of 300 rad/s.

The determination of so-called Shear Thinning Factor (STF) is done, as described in equation 9.

$$\mathrm{STF} = \frac{\mathrm{Eta}^* \ \mathrm{for} \ (\omega = 0.05 \ \mathrm{rad/s})}{\mathrm{Eta}^* \ \mathrm{for} \ (\omega = 300 \ \mathrm{rad/s})} \quad (9)$$

The values are determined by means of a single point interpolation procedure, as defined by Rheoplus software. In situations for which a given G* value is not experimentally reached, the value is 10 determined by means of an extrapolation, using the same procedure as before. In both cases (interpolation or extrapolation), the option from Rheoplus "- *Interpolate y-values to x-values from parameter"* and the *"logarithmic interpolation type"* were applied.

These tests were done on compression moulded discs.

**n) Shore D hardness**

Shore D hardness was determined according to ISO 868 on compression moulded specimen with a thickness of 4 mm. The shore hardness was determined after 3 s after the pressure foot was in firm contact with the test specimen. The sample was compression moulded according to ISO 17855-2 and milled into specimens of 80x10x4 mm.

**o) Infrared (IR) spectroscopy**

**Amount of "iPP", "PVC", "PA", "PET", "PS" and "C2 rich" determination by Transmission Infra-Red spectroscopy (IR)**

Sample preparation:

All calibration samples and samples to be analyzed are prepared in similar way, on molten pressed plates.
Around 2 to 3 g of compounds to be analyzed are molten at 190°C. Subsequently, for 20 seconds 60 to 80 bar pressure is applied in a hydraulic heating press. Next, the samples are cooled down to room temperature in 40 seconds in a cold press under the same pressure, in order to control the morphology of the compound. The thickness of the plates are controlled by metallic calibrated frame plates 2,5 cm by 2,5 cm, 100 to 200 μm thick (depending MFR from the sample); two plates are produced in parallel at the same moment and in the same conditions. The thickness of each plate is measured before any FTIR measurements; all plates are between 100 to 200 μm thick.
To control the plate surface and to avoid any interference during the measurement, all plates are pressed between two double-sided silicone release papers.
In case of powder samples or heterogeneous compounds, the pressing process would be repeated three times to increase homogeneity by pressed and cutting the sample in the same conditions as described before.

Spectrometer:

Standard transmission FTIR spectroscope such as Bruker Vertex 70 FTIR spectrometer is used with the following set-up:

- a spectral range of 4000-400 $cm^{-1}$,
- an aperture of 6 mm,
- a spectral resolution of 2 $cm^{-1}$,
- with 16 background scans, 16 spectrum scans,
- an interferogram zero filling factor of 32
- Norton Beer strong apodisation.

Spectrum are recorded and analyzed in Bruker Opus software.

Calibration samples:

As FTIR is a secondary method, several calibration standards were compounded to cover the targeted analysis range, typically from:

- 0,2 wt.-% to 2,5 wt.-% for PA
- 0,1 wt.-% to 5 wt.-% for PS
- 0,2 wt.-% to 2,5 wt.-% for PET
- 0,1 wt.-% to 4 wt.-% for PVC

The following commercial materials were used for the compounds: Borealis HC600TF as iPP, Borealis FB3450

as HDPE and for the targeted polymers such RAMAPET N1S

(Indorama Polymer) for PET, Ultramid® B36LN (BASF) for Polyamide 6, Styro-lution PS 486N (Ineos) for High Impact Polystyrene (HIPS), and for PVC Inovyn PVC 263B (under powder form).

All compounds are made at small scale in a Haake kneader at a temperature below 265°C and less than 10 minutes to avoid degradation.

Additional antioxidant such as Irgafos 168 (3000 ppm) is added to minimize the degradation.

Calibration:

The FTIR calibration principle is the same for all the components: the intensity of a specific FTIR band divided by the plate thickness is correlated to the amount of component determined by $^1H$ or $^{13}C$ solution state NMR on the same plate.

Each specific FTIR absorption band is chosen due to its intensity increase with the amount of the component concentration and due to its isolation from the rest of the peaks, whatever the composition of the calibration standard and real samples.

This methodology is described in the publication from Signoret and al. "Alterations of plastic spectra in MIR and the potential impacts on identification towards recycling", Resources, conservation and Recycling journal, 2020, volume 161, article 104980.

The wavelength for each calibration band is:

- 3300 $cm^{-1}$ for PA,
- 1601 $cm^{-1}$ for PS,
- 1410 $cm^{-1}$ for PET,
- 615 $cm^{-1}$ for PVC,
- 1167 $cm^{-1}$ for iPP.

For each polymer component i, a linear calibration (based on linearity of Beer-Lambert law) is constructed. A typical linear correlation used for such calibrations is given below:

$$x_i = A_i . \frac{E_i}{d} + B_i$$

where $x_i$ is the fraction amount of the polymer component i (in wt.-%)

$E_i$ is the absorbance intensity of the specific band related to the polymer component i (in a.u. absorbance unit). These specific bands are, 3300 $cm^{-1}$ for PA, 1601 $cm^{-1}$ for PS, 1410 $cm^{-1}$ for PET, 615 $cm^{-1}$ for PVC, 1167 $cm^{-1}$ for iPP d is the thickness of the sample plate

$A_i$ and $B_i$ are two coefficients of correlation determined for each calibration curve No specific isolated band can be found for C2 rich fraction and as a consequence the C2 rich fraction is estimated indirectly,

$$x_{C2\ rich} = 100 - (x_{iPP} + x_{PA} + x_{PS} + x_{PET} + x_{EVA} + x_{PVC} + x_{chalk} + x_{talc})$$

The EVA, Chalk and Talc contents are estimated "semi-quantitatively". Hence, this renders the C2 rich content "semi-quantitative".

The following bands are used to estimate the EVA, Chalk and Talc contents:

EVA: band centred at 607 $cm^{-1}$

Chalk : band centred at 1798 $cm^{-1}$

Talc : band centred at 3676 $cm^{-1}$

For each calibration standard, wherever available, the amount of each component is determined by either $^1H$ or $^{13}C$ solution state NMR, as primary method (except for PA). The NMR measurements are performed on the exact same FTIR plates used for the construction of the FTIR calibration curves.

**p) Thermogravimetric Analysis (TGA) of carbon black content by TGA**

Thermogravimetric Analysis (TGA) experiments were performed with a TA Instruments TGA 5500. Approximately 10-20 mg of materials were placed in a platinum pan. The temperature was equilibrated at 50°C for 10 minutes, and afterwards raised to 900°C under nitrogen at 20°C/min. Afterwards the temperature was lowered to 300°C at 20°C/min, gas switched to oxygen, and the temperature was raised again to 900°C. The weight loss in this final step was assigned to carbon black.

***Materials***

The following polyethylene materials were used for preparing the compositions analyzed below:

*Recycled polyethylene components*

Three recycled polyethylene components rPEa, rPEb and rPEc were used in the inventive examples. Among them, both rPEa and rPEb are post-consumer recyclates including a large part of recycled post-consumer plastic waste coming from pre-sorted municipal (household) waste; whereas rPEc includes approximately 40 wt.-% HDPE post-industrial recyclate and recycled post-consumer plastic waste from pre-sorted municipal (household) waste.

Two recycled polyethylenes rPEd and rPEe were used in the comparative examples, wherein rPEd is based on feedstock of post-consumer waste mainly comprising pre-sorted community waste and is commercially available. rPEe was obtained from a mixed-plastic fraction sorted out from municipal solid waste (MSW) from Greece and Poland and prepared as described in WO 2024/153753 A1.

The main properties of the recycled polyethylene components are described below:

rPEa: has a density of 928.1 kg/$m^3$, an $MFR_2$ of 1.28 g/10 min, an MFRs of 4.14 g/10 min and an amount of continuous C3 units (PP) of 2.31 wt.-%, determined by quantitative $^{13}C\{^1H\}$ NMR measurement of the soluble fraction.

rPEb: has a density of 944.0 kg/$m^3$, an $MFR_2$ of 0.73 g/10 min, an MFRs of 2.69 g/10 min and an amount of continuous C3 units (PP) of 3.22 wt.-%, determined by quantitative $^{13}C\{^1H\}$ NMR measurement of the soluble fraction.

rPEc: has a density of 953.2 kg/$m^3$, an $MFR_2$ of 0.49 g/10 min, an MFRs of 1.75 g/10 min and an amount of continuous C3 units (PP) of 4.94 wt.-%, determined by quantitative $^{13}C\{^1H\}$ NMR measurement of the soluble fraction.

rPEd: has a density of 957.0 kg/$m^3$, a $MFR_2$ of 0.55 g/10 min, a MFRs of 2.73 g/10 min and an amount of continuous C3 units (PP) of 6.94 wt.-%, determined by quantitative $^{13}C\{^1H\}$ NMR measurement of the soluble fraction.

rPEe: has a density of 961.5 kg/$m^3$, a $MFR_2$ of 0.39 g/10 min, a MFRs of 1.69 g/10 min and an amount of continuous C3 units (PP) of 1.45 wt.-%, determined by quantitative $^{13}C\{^1H\}$ NMR measurement of the soluble fraction.

**Table 2:** Properties of the recycled polyethylene components.

| **Recycled polyethylene component / Property** | **rPEa** | **rPEb** | **rPEc** | **rPEd** | **rPEe** |
|---|---|---|---|---|---|
| Density (kg/$m^3$) | 928.1 | 944.0 | 953.2 | 957.0 | 961.5 |
| IR - C2 rich (wt.-%) | 95 | n.a. | n.a. | 93 | 99 |
| IR - Chalk (wt.-%) | 0.2 | n.a. | n.a. | 0.2 | 0.1 |
| IR - PA (wt.-%) | n.d. | n.a. | n.a. | 0.1 | n.d. |
| IR - Talc (wt.-%) | n.d. | n.a. | n.a. | 0.1 | 0.1 |
| IR - VA (wt.-%) | 0.2 | n.a. | n.a. | 0.1 | n.d. |
| IR - iPP (wt.-%) | 3.7 | n.a. | n.a. | 5.6 | 0.8 |
| $MFR_2$ (g/10 min, 190°C) | 1.28 | 0.73 | 0.49 | 0.55 | 0.39 |
| $MFR_{21}$ (g/10 min, 190°C) | 45.43 | 34.79 | 27.63 | 49.74 | 33.75 |
| $MFR_5$ (g/10 min, 190°C) | 4.14 | 2.69 | 1.75 | 2.73 | 1.69 |

(continued)

| Recycled polyethylene component / Property | rPEa | rPEb | rPEc | rPEd | rPEe |
|---|---|---|---|---|---|
| $MFR_{21}/MFR_2$ | 35.49 | 47.66 | 56.39 | 90.44 | 86.54 |
| NMR C2 total (wt.-%) | 92.15 | 91.48 | 91.58 | 91.89 | 98.22 |
| NMR C4 total (wt.-%) | 2.12 | 1.61 | 1.27 | 0.51 | 0.15 |
| NMR C6 total (wt.-%) | 3.05 | 2.79 | 1.49 | 0.53 | 0.17 |
| NMR PP total (continuous C3) (wt.-%) | 2.31 | 3.22 | 4.94 | 6.94 | 1.45 |
| OCS Contaminations (100-299μm) (1/kg) | 482 | 842 | 4188 | n.a. | n.a. |
| OCS Contaminations (300-599μm) (1/kg) | 5699 | 19547 | 45594 | n.a. | n.a. |
| OCS Contaminations (600-1000μm) (1/kg) | 3210 | 18416 | 5030 | n.a. | n.a. |
| OCS Contaminations (>1000μm) (1/kg) | 311 | 833 | 9 | n.a. | n.a. |
| OCS Gel (100-299μm) (1/kg) | 732212 | 1073255 | 1932872 | n.a. | n.a. |
| OCS Gel (300-599μm) (1/kg) | 58957 | 135445 | 45428 | n.a. | n.a. |
| OCS Gel (600-1000μm) (1/kg) | 6716 | 4028 | 171 | n.a. | n.a. |
| OCS Gel (>1000μm) (1/kg) | 266 | 0 | 0 | n.a. | n.a. |
| OCS Others (100-299μm) (1/kg) | 2573 | 5235 | 31066 | n.a. | n.a. |
| OCS Others (300-599μm) (1/kg) | 10310 | 16480 | 128476 | n.a. | n.a. |
| OCS Others (600-1000μm) (1/kg) | 6714 | 10124 | 74346 | n.a. | n.a. |
| OCS Others (>1000μm) (1/kg) | 1185 | 6124 | 30013 | n.a. | n.a. |
| XHU ISO-10147 (wt.-%) | 0.31 | 0.34 | 0.64 | 0.29 | 0.31 |
| XRF_Cl (ppm) | 333 | 880 | 372 | 497 | 72 |
| XRF_Cu (ppm) | n.d. | 16 | 12 | n.d. | 19 |
| XRF_Co (ppm) | n.d. | n.d. | n.d. | n.d. | n.d. |
| XRF_Fe (ppm) | 68 | 143 | 118 | 240 | 89 |
| XRF_Mo (ppm) | n.d. | n.d. | n.d. | n.d. | n.d. |
| XRF_Pb (ppm) | n.d. | 7 | 9 | 96 | 10 |
| XRF_S (ppm) | 52 | 116 | 92 | 130 | 62 |
| XRF_Ti (ppm) | 205 | 2788 | 2161 | 1080 | 4390 |
| XRF_Zn (ppm) | 199 | 143 | 58 | 66 | 54 |
| n.d. = not determinable, e.g., lower than LOQ/LOD (limit of quantification/limit of detection), or not detected for XRF results<br>n.a. = not available | | | | | |

*Virgin polyethylene components*

vPEa: is a high density polyethylene (bimodal copolymer of ethylene and 1-hexene) having a density of 949.6 $kg/m^3$, an $MFR_2$ of 0.05 g/10 min and an MFRs of 0.25 g/10 min. Further, it has a strain hardening modulus of 83.7 MPa, an $eta_{0.05}$ value of 175,270 Pa.s and a shear thinning factor of 136.82. It is commercially available from the Borealis Group.

vPEb: is a high density polyethylene (bimodal copolymer of ethylene and 1-butene) having a density of 945.8 $kg/m^3$, an $MFR_2$ of 0.55 g/10 min and an MFRs of 2.04 g/10 min. Further, it has a strain hardening modulus of 27.4 MPa, an $eta_{0.05}$ value of 21,897 Pa.s and a shear thinning factor of 28.81. It is commercially available from the Borealis Group.

(continued)

vPEc: is a linear low density polyethylene (bimodal copolymer of ethylene and 1-butene) having a density of 924.8 kg/$m^3$, an $MFR_2$ of 0.84 g/10 min and an MFRs of 3.38 g/10 min. Further, it has a strain hardening modulus of 16.6 MPa, an $eta_{0.05}$ value of 17,695 Pa.s and a shear thinning factor of 29.49. It is commercially available from the Borealis Group.

vPEd: is a medium density polyethylene (bimodal copolymer of ethylene and 1-butene) having a density of 936.0 kg/$m^3$, an $MFR_2$ of 0.70 g/10 min and an MFRs of 3.00 g/10 min. Further, it has an $eta_{0.05}$ value of 21,583 Pa.s and a shear thinning factor of 26.42. It is commercially available from the Borealis Group.

*Other ingredients*

Add1 is a carbon black masterbatch comprising 60.3 wt.-% of a HDPE ($MFR_2$ of 12 g/10min; density of 963.0 kg/$m^3$) carrier and 39.5 wt.-% of carbon black (Printex Alpha A) and 0.2 wt.-% of antioxidant (SONGNOX 11B FF).

SONGNOX 11B FF (blend of tris(2,4-di-tert-butylphenyl) phosphite and Pentaerythrityl-tetrakis(3-(3',5'-di-tert. butyl-4-hydroxyphenyl)-propionate (1:1)) (Add2) is an antioxidant commercially available from Songwon.

CEASIT AV/T (Add3) is a granular calcium stearate commercially available from Baerlocher AG.

PALMAROLE MDA.P.11G2 (2,2'-oxamido bis-(ethyl-3-(3,5-di-tert. butyl-4-hydroxyphenyl) propionate) (Add4) is a metal deactivator commercially available from Palmarole AG.

IRGANOX® B225 FF (Add5) is a processing and long-term thermal stabilizer with high phenolic antioxidant content available from BASF, Ludwigshafen, Germany and is a blend of 50 wt.-% of Irgafos® 168 and 50 wt.-% of Irganox® 1010.

*Preparation*

The blending of the recycled fractions with the virgin polyethylenes was conducted on a Coperion W&P ZSK 32-mm co-rotating, twin-screw extruder at barrel temperatures of up to 230°C and screw speed of 300 rpm.

The obtained mixed polyethylene compositions and the measured properties thereof are shown in Tables 3 and 4 below.

**Table 3:** Compositions according to comparative and inventive examples.

| Example / Ingredient | CE1 | CE2 | IE1 | IE2 | IE3 | IE4 | IE5 | IE6 | IE7 |
|---|---|---|---|---|---|---|---|---|---|
| vPEa | | 10 | 20 | 20 | 20 | 20 | 20 | 20 | 20 |
| vPEb | | | 23.1 | 23.1 | 23.1 | 23.1 | 23.1 | 23.1 | 23.2 |
| vPEc | | 33.4 | | | | | | | |
| vPEd | 43.4 | | | | | | | | |
| rPEa | | | 50 | | 40 | 30 | 20 | 10 | |
| rPEb | | | | | 10 | 20 | 30 | 40 | 50 |
| rPEc | | | | 50 | | | | | |
| rPEd | 49.85 | | | | | | | | |
| rPEe | | 50 | | | | | | | |
| Add1 | 6.6 | 6.6 | 6.6 | 6.6 | 6.6 | 6.6 | 6.6 | 6.6 | 6.6 |
| Add2 | | | 0.2 | 0.2 | 0.2 | 0.2 | 0.2 | 0.2 | 0.2 |
| Add3 | 0.025 | | | | | | | | |
| Add4 | | | 0.1 | 0.1 | 0.1 | 0.1 | 0.1 | 0.1 | 0.1 |

(continued)

| Example / Ingredient | CE1 | CE2 | IE1 | IE2 | IE3 | IE4 | IE5 | IE6 | IE7 |
|---|---|---|---|---|---|---|---|---|---|
| Add5 | 0.125 | | | | | | | | |

All amounts are given in wt.-%, based on the total weight of the composition.

**Table 4:** Properties of the compositions.

| Example / Property | CE1 | CE2 | IE1 | IE2 | IE3 | IE4 | IE5 | IE6 | IE7 |
|---|---|---|---|---|---|---|---|---|---|
| Flexural modulus (MPa) | 1058 | 997 | 758 | 922 | 766 | 763 | 778 | 781 | 765 |
| Impact strength 1eA -20°C (KJ/$m^2$) | 3.98 | 5.01 | 4.91 | 3.59 | 4.51 | 4.31 | 4.12 | 3.93 | 4.08 |
| Impact strength 1eA -30°C (KJ/$m^2$) | 3.72 | 4.44 | 4.09 | 3.63 | 3.95 | 3.91 | 3.94 | 3.66 | 3.73 |
| Impact strength 1eA 0°C (KJ/$m^2$) | 5.41 | 6.71 | 6.64 | 4.54 | 6.09 | 5.97 | 5.91 | 5.29 | 5.60 |
| Shore D 3s | 61.4 | 61.3 | 57.9 | 60.7 | 58.1 | 58.1 | 58.5 | 58.8 | 58.4 |
| L01 Strain at break (%) | n.a. | 761.37 | 710.76 | 576.88 | 740.71 | 725.88 | 732.82 | n.a. | 712.43 |
| L01 Stress at break (MPa) | n.a. | 21.59 | 22.92 | 16.02 | 23.23 | 22.41 | 22.35 | n.a. | 21.38 |
| L01 1000h Strain at break (%) | n.a. | 785.54 | n.a. | 594.28 | 715.11 | 732.35 | 731.03 | n.a. | 687.39 |
| L01 1000h Stress at break (MPa) | n.a. | 21.39 | n.a. | 16.22 | 21.59 | 22.13 | 21.65 | n.a. | 20.36 |
| Density (kg/$m^3$) | 959.9 | 960.1 | 951.0 | 964.2 | 952.3 | 953.8 | 955.2 | 957.2 | 958.8 |
| ESCR - time for 0% failure (h) | n.a. | >5000 | >5000 | >5000 | >5000 | >5000 | >5000 | >5000 | >5000 |
| $Eta_{0.05}$ (Pa.s) | 23155 | 41244 | 27906 | 45734 | 28685 | 30808 | 32511 | 34906 | 37163 |
| $Eta_{300}$ (Pa.s) | 678 | 752 | 798 | 840 | 785 | 780 | 776 | 779 | 777 |
| STF = $Eta_{0.05}$/$Eta_{300}$ | 34.15 | 54.85 | 34.97 | 54.45 | 36.54 | 39.50 | 41.90 | 44.81 | 47.83 |
| $MFR_2$ (g/10 min, 190°C) | 0.68 | 0.35 | 0.53 | 0.27 | 0.5 | 0.46 | 0.41 | 0.37 | 0.35 |
| $MFR_{21}$ (g/10 min, 190°C) | 53.82 | 37.44 | 30.62 | 22.12 | 31.59 | 28.14 | 25.98 | 24.65 | 21.05 |
| $MFR_5$ (g/10 min, 190°C) | 2.75 | 1.53 | 1.99 | 1.06 | 2.11 | 1.81 | 1.57 | 1.45 | 1.22 |
| $MFR_{21}/MFR_2$ | 79.15 | 106.97 | 57.77 | 81.93 | 63.18 | 61.17 | 63.37 | 66.62 | 61.34 |
| NMR C2 total (wt.-%) | 93.85 | 96.32 | 95.07 | 94.91 | 95.19 | 95.1 | 95.29 | 95.49 | 95.17 |
| NMR C4 total (wt.-%) | 2.39 | 2.61 | 1.55 | 1.32 | 1.61 | 1.43 | 1.3 | 1.23 | 1.37 |
| NMR C6 total (wt.-%) | 0.24 | 0.38 | 2.21 | 1.41 | 1.96 | 2.03 | 1.76 | 1.77 | 1.49 |

(continued)

| Example / Property | CE1 | CE2 | IE1 | IE2 | IE3 | IE4 | IE5 | IE6 | IE7 |
|---|---|---|---|---|---|---|---|---|---|
| NMR PP total (continuous C3) (wt.-%) | 3.44 | 0.69 | 1.16 | 2.35 | 1.13 | 1.22 | 1.35 | 1.51 | 1.56 |
| SH modulus (MPa) | 15.25 | 16.82 | 22.56 | 25.87 | 21.36 | 21.39 | 21.34 | 21.04 | 21.38 |
| L02 Strain at break (%) | 661.1 | 851.56 | 824.6 | 687.02 | 788.76 | 965.85 | 811.26 | 945.89 | 918.14 |
| L02 Stress at break (MPa) | 16.67 | 24.87 | 26.2 | 19.98 | 23.21 | 24.36 | 20.55 | 22.95 | 22.36 |
| L02 100°C, 240h Strain at break (%) | 547.78 | 769.14 | 864.31 | 562.74 | 783.56 | 829.56 | 764.89 | 778.83 | 751.58 |
| L02 100°C, 240h Stress at break (MPa) | 11.42 | 21.26 | 25.88 | 17.63 | 23.22 | 23.17 | 20.83 | 20.37 | 20.16 |
| L02 110°C, 336h Strain at break (%) | 581.53 | 798.58 | 886.27 | 641.56 | 824.35 | 785.33 | 816.22 | 790.56 | 627.47 |
| L02 110°C, 336h Stress at break (MPa) | 12.47 | 21.36 | 26.64 | 17.08 | 23.64 | 22.26 | 22.64 | 21.88 | 18.50 |
| Tear resistance (N/mm) | 25.81 | 26.84 | 31.21 | 30.66 | 30.4 | 30.35 | 30.22 | 30.28 | 28.98 |
| n.a. = not available | | | | | | | | | |

All inventive examples show excellent mechanical properties comparable to or improved over the comparative examples.

Flexural modulus is lower in the inventive examples indicating a higher flexibility of the material. Shore D 3s is also lower. Tear resistance is higher, and thus improved.

The tensile properties are excellent and for some inventive examples improved over the comparative examples, in particular for inventive examples comprising recycled polyethylene component rPEa and/or rPEb.

The data demonstrate that three recycled polyethylene components which differ strongly in their amount of contamination, density and melt flow rates can lead to compositions of excellent properties when combined with the virgin polyethylene components.

## Claims

**1.** A mixed virgin polyethylene / recycled polyethylene composition having a melt flow rate $MFR_2$ (ISO 1133:2022, 2.16 kg, 190 °C) in the range of from 0.10 to less than 1.00 g/10 min, and a density (ISO 1183-1:2019) in the range of from 940 to 980 kg/m$^3$, the composition comprising

A) a recycled polyethylene fraction comprising at least a first recycled polyethylene component (rPE1), wherein the recycled polyethylene fraction is present in an amount of 40 wt.-% or more, based on the total weight of the mixed virgin polyethylene / recycled polyethylene composition, and

B) a virgin polyethylene fraction comprising at least a first virgin polyethylene component (vPE1), wherein the first virgin polyethylene component (vPE1) has a melt flow rate $MFR_5$ (ISO 1133:2022, 5 kg, 190 °C) of up to 0.50 g/10 min, and a density (ISO 1183-1:2019) of from 942 to 975 kg/m$^3$, and is present in an amount of 15 wt.-% or more, based on the total weight of the mixed virgin polyethylene / recycled polyethylene composition,

wherein the mixed virgin polyethylene / recycled polyethylene composition has, as determined by quantitative $^{13}C\{^1H\}$ NMR spectroscopy as described herein:

(a) a total amount of ethylene units (C2 units) of at least 90 wt.-%, and

(b) a total amount of continuous propylene units (C3 units) in the range of from 0.1 to 5.0 wt.-%.

**2.** The mixed virgin polyethylene / recycled polyethylene composition according to claim 1, wherein the at least one recycled polyethylene component (rPE1) in the recycled polyethylene fraction has at least one of:

i1) a content of iron (Fe) of 200 ppm or less,
i2) a content of titanium (Ti) of 3,500 ppm or less,
i3) a content of zinc (Zn) of 300 ppm or less,
i4) a content of chlorine (Cl) of 1,200 ppm or less, and/or
i5) a content of sulfur (S) of 150 ppm or less,
determined by X-ray fluorescence (XRF) spectroscopy as described herein and based on the total weight of the recycled polyethylene component (rPE1); wherein a total content of Fe, Ti, Zn, Cl and S amounts to at least 10 ppm.

**3.** The mixed virgin polyethylene / recycled polyethylene composition according to any one of the preceding claims, wherein the first recycled polyethylene component (rPE1) in the recycled polyethylene fraction has, as determined by quantitative $^{13}C\{^1H\}$ NMR spectroscopy as described herein:

(a) a total amount of ethylene units (C2 units) of at least 88 wt.-%; and
(b) a total amount of continuous propylene (C3 units) in the range of from 0.1 to 6.0 wt.-%.

**4.** The mixed virgin polyethylene / recycled polyethylene composition according to any one of the preceding claims, wherein the first recycled polyethylene component (rPE1) in the recycled polyethylene fraction has a density (ISO 1183-1:2019) in the range of from 920 to 955 kg/m$^3$.

**5.** The mixed virgin polyethylene / recycled polyethylene composition according to any one of the preceding claims, wherein the first recycled polyethylene component (rPE1) in the recycled polyethylene fraction is present in an amount of 10 wt.-% or more, preferably 20 wt.-% or more, based on the total weight of the mixed virgin polyethylene / recycled polyethylene composition.

**6.** The mixed virgin polyethylene / recycled polyethylene composition according to any one of the preceding claims, wherein the recycled polyethylene fraction further comprises a second recycled polyethylene component (rPE2).

**7.** The mixed virgin polyethylene / recycled polyethylene composition according to any one of the preceding claims, wherein the mixed virgin polyethylene / recycled polyethylene composition has a density (ISO 1183-1:2019) in the range of from 946 to 980 kg/m$^3$, and the first virgin polyethylene component (vPE1) has a melt flow rate $MFR_2$ (ISO 1133:2022, 2.16 kg, 190 °C) in the range of from 0.01 to 0.30 g/10 min and a density (ISO 1183-1:2019) in the range of from 945 to 975 kg/m$^3$.

**8.** The mixed virgin polyethylene / recycled polyethylene composition according to any one of the preceding claims, wherein the virgin polyethylene fraction further comprises a second virgin polyethylene component (vPE2) having a melt flow rate $MFR_2$ (ISO 1133:2022, 2.16 kg, 190 °C) in the range of from more than 0.30 to 1.00 g/10 min and a density (ISO 1183-1:2019) in the range of from 940 to 975 kg/m$^3$.

**9.** The mixed virgin polyethylene / recycled polyethylene composition according to any one of the preceding claims, wherein the first virgin polyethylene component (vPE1) and the second virgin polyethylene component (vPE2), if present, is/are a bimodal polyethylene.

**10.** The mixed virgin polyethylene / recycled polyethylene composition according to any one of the preceding claims, wherein the first virgin polyethylene component (vPE1) is a copolymer of ethylene and one or more comonomer units selected from alpha-olefins having from 4 to 6 carbon atoms.

**11.** The mixed virgin polyethylene / recycled polyethylene composition according to any one of the preceding claims, wherein the mixed virgin polyethylene / recycled polyethylene composition has, as determined by quantitative $^{13}C\{^1H\}$ NMR spectroscopy as described herein:

(c) a total amount of C4 units in the range of from 0.1 to 5.0 wt.-%, and/or
(d) a total amount of C6 units in the range of from 0.1 to 5.0 wt.-%.

**12.** The mixed virgin polyethylene / recycled polyethylene composition according to any one of the preceding claims, wherein the mixed virgin polyethylene / recycled polyethylene composition has at least one, preferably all, of the following properties:

(i) an environmental stress crack resistance (ESCR) according to the Bell test, in accordance with IEC 60811-406, method B and as described herein of at least 1,000 h failure time, preferably at least 2500 h failure time;
(ii) a tear resistance, determined according to BS 6469 section 99.1 of at least 28 N/mm;
(iii) a strain hardening modulus, determined according to ISO 18488 and as described herein, of at least 18 MPa;
(iv) a flexural modulus, determined according to ISO 178 method A, of less than 980 MPa; and/or
(v) a Shore D hardness, measured after 3s according to ISO 868, Shore D 3s, of at least 55.

**13.** A method of preparing the mixed virgin polyethylene / recycled polyethylene composition according to any one of the preceding claims 1 to 12, comprising the steps of melting, blending and extruding the recycled polyethylene fraction and the virgin polyethylene fraction in an extruder in the optional presence of additives.

**14.** Article comprising the mixed virgin polyethylene / recycled polyethylene composition according to any one of claims 1 to 12.

**15.** Use of the mixed virgin polyethylene / recycled polyethylene composition according to any one of claims 1 to 12 for wire and/or cable jacketing applications.

Europäisches Patentamt
European Patent Office
Office européen des brevets

# EUROPEAN SEARCH REPORT

Application Number
EP 24 22 2504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/122299 A1 (BOREALIS AG [AT]) 24 June 2021 (2021-06-24) * ie14 * ----- | 1-15 | INV. C08L23/0807 |
| A | WO 2024/153753 A1 (BOREALIS AG [AT]) 25 July 2024 (2024-07-25) * ie6 * ----- | 1-15 | |
| A | WO 2024/121189 A1 (BOREALIS AG [AT]) 13 June 2024 (2024-06-13) * ie1 * ----- | 1-15 | |
| | | | TECHNICAL FIELDS SEARCHED (IPC) |
| | | | C08L |

The present search report has been drawn up for all claims

| Place of search | Date of completion of the search | Examiner |
|---|---|---|
| Munich | 15 May 2025 | Ritter, Nicola |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 22 2504

This annex lists the patent family members relating to the patent documents cited in the above-mentioned European search report. The members are as contained in the European Patent Office EDP file on
The European Patent Office is in no way liable for these particulars which are merely given for the purpose of information.

15-05-2025

| Patent document cited in search report | Publication date | Patent family member(s) | Publication date |
|---|---|---|---|
| WO 2021122299 A1 | 24-06-2021 | BR 112022011747 A2 | 13-09-2022 |
| | | CN 114829481 A | 29-07-2022 |
| | | EP 4077531 A1 | 26-10-2022 |
| | | KR 20220117909 A | 24-08-2022 |
| | | TW 202126754 A | 16-07-2021 |
| | | US 2023114045 A1 | 13-04-2023 |
| | | WO 2021122299 A1 | 24-06-2021 |
| WO 2024153753 A1 | 25-07-2024 | NONE | |
| WO 2024121189 A1 | 13-06-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018046578 A1
- WO 2021233818 A1
- WO 2024153753 A1
- EP 1327664 A1
- EP 4023712 A1


### Non-patent literature cited in the description


- *Polymer*, 2005, vol. 46, 6369-6379
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B**. *J. Mag. Reson*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **SINGH, G.** ; **KOTHARI, A.** ; **GUPTA, V.** *Polymer Testing*, 2009, vol. 28 (5), 475
- **J. RANDALL**. Macromol. Sci.. *Rev. Macromol. Chem. Phys.*, 1989, vol. C29, 201
- **A. J. BRANDOLINI** ; **D. D. HILLS**. NMR Spectra of Polymers and Polymer Additives. Marcel Dekker Inc., 2000
- **J. RANDALL**. Macromol. Sci.. *Rev. Macromol. Chem. Phys*, 1989, vol. C29, 201
- **KLIMKE, K** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373